# EUROPEAN PATENT APPLICATION

(11) **EP 1 481 951 A1**
(43) Date of publication of application: **01.12.2004**
(21) Application number: 04008106.9
(22) Date of filing: 02.04.2004
(51) Int. Cl.: C03B 37/027, C03B 37/03, C03B 37/12

(54) **Apparatus and method for fabricating optical fiber by spinning**

(30) Priority: 24.05.2003 KR 2003033197
(71) Applicant: Samsung Electronics Co., Ltd., Suwon-si, Gyeonggi-do (KR)
(72) Inventor: Lee, Jae-Ho, Yeongtong-gu Suwon-si Gyeonggi-do (KR); Oh, Sung-Koog, Yeongtong-gu Suwon-si Gyeonggi-do (KR)
(74) Representative: Lang, Johannes, Dipl.-Ing.

(57) **Abstract**

A method and apparatus for fabricating an optical fiber having reduced PMD by spinning are disclosed. In the optical fiber fabricating method, an end of an optical fiber preform is molten and an optical fiber is drawn from the molten preform end. The optical fiber is then coated and spun in a first direction using a first wheel (160). A coating distortion (e.g. twist, torsion) produced is eliminated from the optical fiber by then spinning the optical fiber in a different direction using a second wheel (170).

## Description

### BACKGROUND OF THE INVENTION

### 1. Field of the Invention

The present invention relates generally to an optical fiber, and in particular, to an apparatus and method for fabricating an optical fiber.

### 2. Description of the Related Art

Polarization mode dispersion (PMD) arises from interaction between the physical properties of an optical fiber and the polarization state of light traveling in the optical fiber. Due to double refraction caused by non-circularity and asymmetrical refraction of a core and stress asymmetry during drawing, polarization components propagate along two polarization axes at different group velocities. The resulting DGD (Differential Group Delay) leads to pulse broadening.

There are several ways of combating PMD. One method is spinning an optical fiber to reduce the DGD through mode coupling. Principle axes where polarization modes are set are randomly positioned without any constant directionality. Therefore, as light pulses travel, energy exchange brings about coupling. As a result, the velocity difference between two modes within the optical fiber is narrowed. Thus, the PMD is reduced as the length of the optical fiber increases. However, in view of the random positioning of the principle axes, only the statistical tendency of the PMD can be observed and individual PMD measurements may have great deviations depending on incident polarization and measuring conditions.

For example, if the optical fiber is artificially distorted (or twisted) during drawing, the principle axes shift. The splicing of the optical fiber with a predetermined period renders the random principle axes directional. In this regard, a slow mode on one of the principle axes alternates with a fast mode on the other principle axis, with a predetermined period. Though polarization-incurred distribution occurs locally in the distorted optical fiber, the PMD is reduced for a fiber length equal to or greater than a certain value.

U.S. Patent No. 5,943,466 by Danny L. Henderson, et. al. and entitled "Frequency and amplitude modulated fiber spins for PMD reduction" discloses a spin function including frequency-modulated and amplitude-modulated sign waves. In accordance with this optical fiber fabrication method by spinning, an optical fiber is spun after passing through a coater. The spin is transferred to the end of a fiber preform within a furnace. A spin device is interposed between a drawing device (usually called a capstan) and the coater. The preform end softens in the furnace and an optical fiber is drawn from the molten end of the preform. After cooling, the optical fiber is maintained distorted. The coating of the optical fiber is also maintained distorted (hereinafter, referred to as coating distortion).

While this method prevents fiber breakage caused by shear stress produced during spinning, the spinning affects the optical fiber after it is drawn by the capstan. In other words, the optical fiber, having passed through the capstan and being maintained distorted, is wound around a spool. The splicing adversely affects the local stress distribution of the fiber in an unintended way during loose tube cabling.

### SUMMARY OF THE INVENTION

It is, therefore, one object of the present invention to provide an apparatus and method for fabricating an optical fiber by spinning the optical fiber for PMD elimination, without coating distortion.

Two embodiments of the present invention are directed to a method and apparatus for fabricating an optical fiber by spinning. In the optical fiber fabricating method, an end of an optical fiber preform is molten and an optical fiber is drawn from the molten preform end. The optical fiber is then coated and spun in a direction. A coating distortion is eliminated from the optical fiber by spinning the optical fiber in a different direction.

In the optical fiber fabricating apparatus, an end of an optical fiber preform is molten in a furnace and an optical fiber is drawn from the molten preform end. A first wheel, having an outer circumferential surface rotating around a first axis in contact with the optical fiber, spins the optical fiber in a direction. A second wheel, having an outer circumferential surface rotating around a second axis in contact with the optical fiber, spins the optical fiber in a different direction.

### BRIEF DESCRIPTION OF THE DRAWINGS

The above and other objects, features and advantages of the present invention will become more apparent from the following detailed description when taken in conjunction with the accompanying drawings in which:
- FIG. 1: illustrates the structure of an apparatus for fabricating an optical fiber by spinning according to an embodiment of the present invention;
- FIGs. 2A and 2B: illustrate an embodiment of the operations of first and second wheels illustrated in FIG. 1;
- FIGs. 3A and 3B: illustrate another embodiment of the operations of the first and second wheels; and
- FIGs. 4A and 4B: illustrate a third embodiment of the operations of the first and second wheels.

### DETAILED DESCRIPTION OF THE PREFERRED EMBODIMENTS

Preferred embodiments of the present invention will be described herein below with reference to the accompanying drawings. For the purposes of clarity and simplicity, well-known functions or constructions are not described in detail as they may obscure the invention in unnecessary detail.

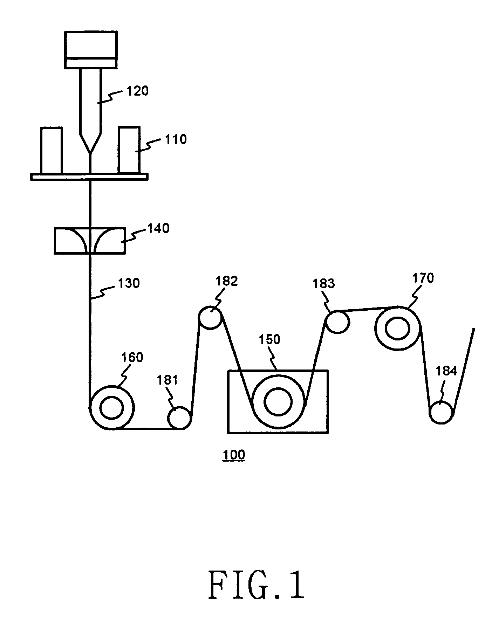

FIG. 1 illustrates the structure of an apparatus 100 for fabricating an optical fiber by spinning according to an embodiment of the present invention. Referring to FIG. 1, the optical fiber fabricating apparatus 100 is comprised of a furnace 110, a coater 140, a capstan 150, first and second wheels 160 and 170, and a plurality of pulleys 181 to 184.

An end of an optical preform 120 is molten in the furnace 110. The furnace 110 may be cylindrical. The optical preform 120 is the same in structure as an optical fiber 130 drawn from it, but has a larger diameter than the optical fiber 130. To prevent the inside of the furnace 110 from heat-caused oxidation, inert gases can be injected into the furnace 110.

The coater 140 coats a coating solution such as a UV-cured resin or a heat-cured resin on the optical fiber 130 drawn from the furnace 110. If the UV-cured resin is used, a UV curer is additionally provided under the coater 140, for irradiating the UV-cured resin with UV light and curing it.

The capstan 150 pulls the optical fiber 130 with a predetermined force so that the optical fiber 130 is continuously drawn with a constant diameter.

The first wheel 160, positioned between the coater 140 and the capstan 150, contacts a first axis (i.e., a rotation axis) and the optical fiber 130. Its outer circumferential surface rotates around the first axis. The first axis vibrates within a predetermined angle range, or inclines at a predetermined angle with respect to a position perpendicular to an optical fiber drawing axis, so that the optical fiber 130 rolls over the outer circumferential surface of the first wheel 160. In this regard, the first wheel 160 spins the optical fiber 130 and a transfer of the spin is applied to the end of the optical fiber preform 120.

The second wheel 170, positioned behind the capstan 150 in an optical fiber drawing path, contacts a second axis and the optical fiber 130. Its outer circumferential surface rotates around the second axis. The second axis vibrates within a predetermined angle range, or inclines at a predetermined angle with respect to a position perpendicular to the optical fiber drawing axis, so that the optical fiber 130 rolls over the outer circumferential surface of the second wheel 170. The first and seconds wheels 160 and 180 vibrate or incline in different directions. The second wheel 170 spins the optical fiber 130, thereby eliminating the coating distortion from the optical fiber 130. In this regard, the coating distortion caused by the first wheel 160 is maintained in optical fiber drawing paths before and after the capstan 150. The second wheel 170 is disposed in the optical fiber drawing path after the capstan 150 and spins the optical fiber in a different direction so that the coating distortion is eliminated.

The pulleys 181 to 184 are installed in the optical fiber drawing path, for assisting changes of the path.

In the above embodiment, the capstan 150 positioned between the first and second wheels 160 and 170 functions to hold the optical fiber 130 to allow the second wheel 170 positioned differently from the first wheel 160 to release the coating distortion of the optical fiber 130. Without an optical fiber holder between the first and second wheels 160 and 170, such as the capstan 150, it would not be impossible to spin the optical fiber 130.

In another embodiment, an optical fiber holder other than the capstan 150 maybe additionally disposed between the first and second wheels 160 and 170 so that the capstan 150 can be arranged in the optical fiber drawing path after the second wheel 170. For example, an additional pulley can be installed between the first and second wheels 160 and 170 to hold the optical fiber 130, though it is not preferable in terms of stable drawing. In this case, the second wheel 170 is positioned between the additional pulley and the capstan 150, for spinning the optical fiber 130 and thus eliminates the coating distortion from the optical fiber 130.

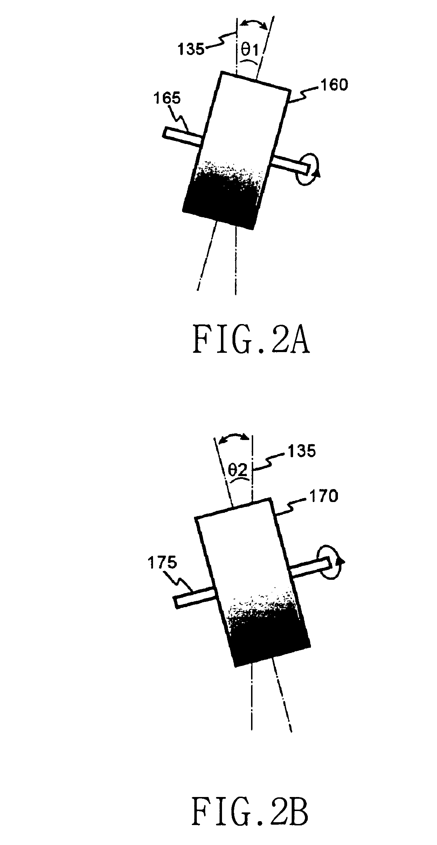

FIGs. 2A and 2B illustrate an embodiment of the operations of the first and second wheels according to aspects of the present invention. Referring to FIGs. 2A, a first rotation axis 165 for the first wheel 160 vibrates within a clockwise angle range θ1 from an optical fiber drawing axis 135 Referring to FIG 2B, a second axis 175 for the second wheel 170 vibrates within a counterclockwise angle range θ2 from the optical fiber drawing axis 135. Preferably, the angle range of θ1 is between 1 to 6 degrees and the angle range of θ2 is between 1 to 6 degrees. It is noted that the first and second wheels 160 and 170 may vibrate in either direction, respectively, as long as they vibrate in different directions.

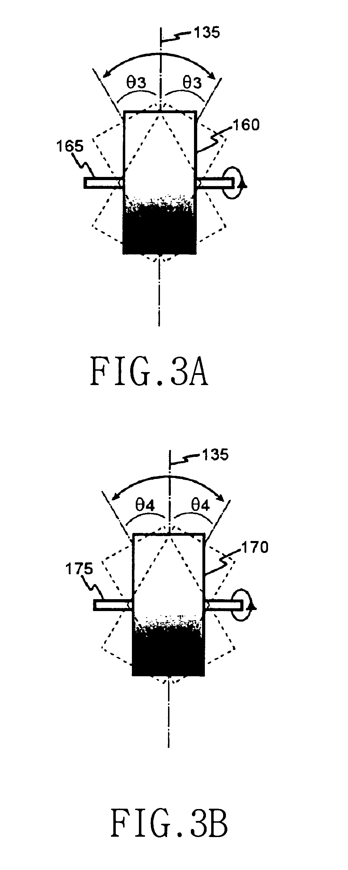

FIGs. 3A and 3B illustrate another embodiment of the operations of the first and second wheels. Referring to FIG. 3A the first axis 165 for the first wheel 160 vibrates within an angle range 2xθ3, θ3 to the left and θ3 to the right from the optical fiber drawing axis 135. Referring to FIG 3B, the second axis 175 for the second wheel 170 vibrates within an angle range 2xθ4, θ4 to the left and θ4 to the right from the optical fiber drawing axis 135. Preferably, the angle range of θ3 is between 1 to 6 degrees and the angle range of θ4 is between 1 to 6 degrees. As noted above, the first and second wheels 160 and 170 should vibrate in different directions.

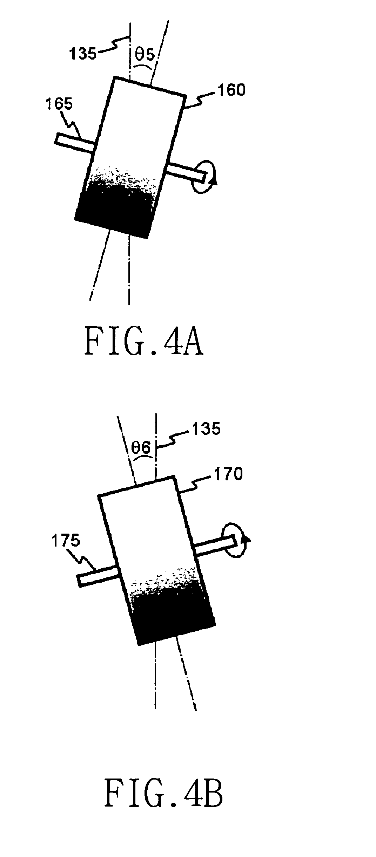

FIGs. 4A and 4B illustrate a third embodiment of the operations of the first and second wheels. Referring to FIG. 4A, the first axis 165 for the first wheel 160 inclines at a clockwise angle θ5 from the optical fiber drawing axis 135. Referring to FIG 4B, the second axis 175 for the second wheel 170 inclines at a counterclockwise angle θ6 from the optical fiber drawing axis 135. Preferably, the angle range of θ5 is between 1 to 6 degrees and the angle range of θ6 is between 1 to 6 degrees. The first and second wheels 160 and 170 may include in either direction as long as they incline in different directions.

As described above, the spinning-based optical fiber fabricating apparatus and method can remove PMD without coating distortion using the first and second wheels that vibrate or incline in different directions.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of fabricating an optical fiber, comprising the steps of:
melting an end of an optical fiber preform;
drawing an optical fiber from the molten preform end;
coating the optical fiber;
spinning the optical fiber in a first direction; and
eliminating a coating distortion from the optical fiber by spinning the optical fiber in a second direction that is different from the first direction.

2. An apparatus for fabricating an optical fiber, comprising:
a furnace arranged to melt an end of an optical fiber preform;
a mechanism arranged to draw an optical fiber from the optical fiber preform;
a first wheel having an outer circumferential surface rotating around a first axis in contact with the optical fiberand arranged to spin the optical fiber in a first direction; and
a second wheel having an outer circumferential surface rotating around a second axis in contact with the optical fiber and arranged to spin the optical fiber in a second direction that is different from the first direction.

3. The apparatus of claim 2, further comprising a coater between the furnace and the first wheel, for coating a coating solution on the optical fiber drawn from the furnace.

4. The apparatus of claim 2, further comprising a capstan between the first and second wheels, for pulling the optical fiber.

5. The apparatus of claim 2, further comprising a plurality of pulleys installed in an optical fiber drawing path, for changing the optical fiber drawing path.

6. The apparatus of claim 2, wherein the first wheel vibrates in the first direction within a first angle range from an optical fiber drawing axis, and the second wheel vibrates in the second direction different from the first direction within a second angle range from the optical fiber drawing axis.

7. The apparatus of claim 2, wherein the first wheel vibrates within a third angle range to the left and right from the optical fiber drawing axis, and the second wheel vibrates within a fourth angle range to the right and left from the optical fiber drawing axis.

8. The apparatus of claim 2, wherein the first wheel inclines in a third direction at a fifth angle from the optical fiber drawing axis, and the second wheel inclines in a fourth direction different from the third direction at a sixth angle from the optical fiber drawing axis.

9. The apparatus of claim 2, further comprising at least one pulley installed in an optical fiber drawing path between the first and the second wheels.

10. The apparatus of claim 9, further comprising a capstan position after the second wheel.

11. A method of fabricating an optical fiber, comprising the steps of:
melting an end of an optical fiber preform;
drawing an optical fiber from the molten preform end;
coating the optical fiber; and
rolling the optical fiber rolls over the outer circumferential surfaces of a first and second wheel,
wherein the first and seconds wheels vibrate in different directions.

12. A method of fabricating an optical fiber, comprising the steps of:
melting an end of an optical fiber preform;
drawing an optical fiber from the molten preform end;
coating the optical fiber; and
rolling the optical fiber rolls over the outer circumferential surfaces of a first and second wheel,
wherein the first and seconds wheels incline in different directions.
